# EUROPEAN PATENT APPLICATION

(11) **EP 4 692 460 A2**
(43) Date of publication of application: **11.02.2026**
(21) Application number: 25223756.5
(22) Date of filing: 15.03.2018
(51) Int. Cl.: E02B 15/00

(54) **OIL ABSORBENT**

(30) Priority: 17.03.2017 NO 20170399
(62) Divisional of application: 21191451.0
(71) Applicant: M Vest Water AS, 5059 Bergen (NO)
(72) Inventor: MUNDHEIM, Atle, N-5632 Omastrand (NO)
(74) Representative: Acapo Onsagers AS

(57) **Abstract**

An oil absorbent product in the form of calcined granulate whose main constituent is diatomaceous earth having thin walled tubes where typically 90% of the tubes have a diameter of less than 1 micron, where the product has a superhydrophobic oleophilic surface coating of polysiloxane permanently chemically crosslinked to the substrate. The product can be arranged in a filter bed, housing or cartridge and used to remove oil contamination from a process water stream or oil spill or the like.

## Description

The present invention relates to a product and method of use of the product and method for absorbing oil from water by the product being used as a filter medium as set forth in claim 1 and the further independent claims.

More specifically, the invention relates to a product and manufacture of a product for the absorption of undesired oil contaminants in process water where the product consists of an original highly hydrophilic porous calcined granular inorganic material, the main constituent being diatomaceous earth, also called diatoms, and further around 1/3 clay and around 1/10 ashes. This describes calcined Moler with a typical chemical composition of SiO 2 ~ 75%; Al2O3 ~ 10%; Fe 2 O 3 ~ 7%; TiO 2 ~ 1%; MgO ~ 2%; CaO ~ 1%; K2O + Na2O2% which is the preferred raw material of the invention, but similarly calcined products of similar composition may also be used. The raw material according to the invention is made superhydrophobic, that is, the contact angle of the water on the surface of the product is greater or equal to 170 degrees and is rendered highly oleophilic by means of a permanent binding of a siloxane to the metal oxides in the raw material thereby releasing the entire pore volume to the uptake of oil without water absorbing the capacity of the pore volume.

Further, the invention relates to a method of using the product in filter compositions.

Further, the invention relates to a method of regenerating the filter medium when saturated with absorbed oil.

Furthermore, the invention relates to the use of the filter medium for absorbing oil in water and also for absorbing oil spills.

The invention is related to the technology that absorbs oil contaminants in a process water flow by processing the water through an absorbent filter medium that absorbs oil contamination in existing pores in the medium.

The invention also relates to the use of a superhydrophobic granulated filter media for filtering oil from water without the hydrophobic properties limiting hydraulic capacity of water flow through the filter medium.

Also, the invention is related to regenerate oil-saturated filter media for further use.

The invention also relates to the use of the product for the absorption of oil from water into a process water flow and also for the absorption of oil spills.

### Prior art

It is known that there is a variety of inorganic and organic filter media for adsorption and absorption of oil from water and oil spills. Among others, clay, heat treated bark and walnut shell are the most well-known adsorbents, and active charcoal and zeolite are known as both adsorbent and absorbent. Heat-treated peat moss, cotton and various cellulose products are also known oil absorbers.

As filters in the oil industry, walnut shell filters, amine modified oregano clay filters, and coal filters are most commonly used for the removal of hydrocarbons from an oil contaminated water flow.

It is known that calcined diatomaceous granules can be used for water filtration, and a variety of other filter applications to remove suspended solids. It is also used to some extent to remove oil from water in a process water flow, as the product is highly hydrophobic and has very high affinity for water and absorbs about 110% of its bulk volume, given a grain size of 0.5-0.8 mm. Oil from water absorption capacity is usually, in untreated product, below 40% as the very strong water affinity limits the absorption of oil into the pores. A large fraction of the waste fraction of up to 40%, takes place as adsorption on the surface of the particles, and this oil will easily be washed off and cause leakage of the filter through the flow of high oil concentrations in the process water.

It is also well known that siloxane can be applied as a hydrophobic and oleophilic coating on a surface. It is also known that such coatings normally build 0.5-2 microns thickness.

It is also known that siloxane products can bind with metal oxides by adequate heat treatment.

It is known that diatomaceous is derived from about 110 species of diatoms, of which the largest species are 0.2 mm in diameter and the smallest are 0.02 - 0.04 mm in diameter. The diatomics extracted silica from the water, to create a very porous skeleton of amorphous SiO2. The skeleton consists of thousands of thin-walled tubes where about 90% of these tubes have a diameter below 1 micron.

Detailed description of invention:

It is an objective of the invention to provide a superhydrophobic and strongly oleophilic porous calcined inorganic granulated absorbent product for oil absorption wherein the absorbent element in substrate is in the form of thin-walled tubes where typically 90% of the tubes have a diameter less than 1 micron by adding the product to a permanent chemical crosslinked superhydrophobic oleophilic surface coatings by the formation of Substrate-Si-O ribbon where the average tube diameter reduction due to surface coating is not more than 0.1 micron in which the permanent chemical crosslinked substrate Si-O crosslinks are bound to the substrate of one or more of SiO2, Al2O3, Fe2O3, TiO2, MgO, CaO, K2O and / or Na2O.

It is an objective of the invention to provide a product consisting of a substrate of calcined granulate with a main constituent of diatomaceous earth, also called diatoms, and more preferably but not limited to about 1/3 of clay and preferably but not limited to 1/10 ashes.

It is an objective of the invention to provide a product where permanently chemically crosslinked superhydrophobic strong oleophilic coatings creates a maximum of 0.05 micron thick coating by crosslinking a siloxane, preferably but not limited to, a polysiloxan.

It is an object of the invention to provide a process for preparing a product in which 1-10% siloxane, and preferably 3-5%, is dissolved in an nonpolar de-aromatized volatile hydrocarbon solvent, preferably isoalcanic, and preferably with hydrocarbon chain lengths between C10 and C18, in which substrate is placed and wetted completely , after which solvent is evaporated at a temperature above the solvent evaporation temperature, typically between 170 and 220 degrees Celsius, after which the dry substrate with the coated siloxane is heated to between 170 and 700 degrees Celsius for 15 minutes to 45 minutes, preferably the temperature is 350-400 degrees Celsius for 20-30 minutes, whereby permanent crosslinking will take place between the metal oxides of the substrate and siloxane to form a permanent chemical bond and one with a coating thickness in the range of 0.03-0.55 microns across the substrate surface.

It is an object of the invention to provide a process for manufacturing of a product in which evaporated solvent is cooled to liquid state and reused for repeated mixing and dissolution of a siloxane for new coating of untreated substrate according to the invention.

It is an object of the invention to provide a method of using the product in that the superhydrophobic oleophilic product is placed in a filter housing or in a filter cartridge or in an open filter bed through which a surfactant liquid, preferably an alcohol is being processed, after which the product is flushed with clean water, whereby the product now has a modified hydrophilic surface through which oil contaminated process water is sprayed and whereby the product, despite spotting, receives its original affinity for oil and by oil absorption displace water in pore volume in favour of oil so that all available pore volume is used for oil absorption.

It is an objective of the invention to provide a method of regenerating the product by washing the product in a solvent of dearomatized volatile hydrocarbon, preferably isoalcanic solvent with hydrocarbon chain length in the range of C10 -C18, whereupon solvent is displaced with saline water in which solvent is not dissolved and in which product is washed until saline water also displaces solvent in the pore volume of the product, after which it can be reprocessed oil contaminated water through the product medium.

It is an objective of the invention to provide an application of the product where the product is placed as a media filter or in an open filter bed or in a filter housing or in a filter cartridge

It is an object of the invention to provide an application of a product and method for cleaning oil contamination from a process water flow.

It is an object of the invention to provide an application of the product for the absorption of oil spills.

The product, methods and uses of the invention are characterized by the features which are apparent from the features of the following independent claims.

Further features of the invention are set forth in the dependent claims.

According to the present invention, there is thus obtained a new and improved superhydrophobic and strongly oleophilic porous calcined inorganic granulated absorbent product for oil absorption wherein the absorbent element in substrate is in the form of thin-walled tubes where typically 90% of the tubes have a diameter less than 1 micron in that the product a permanent chemical crosslinked superhydrophobic oleophilic surface coating is formed by the formation of substrate-Si-O bonds, the average tube diameter reduction due to surface coating is not reduced more than 0.1 micron in which the permanent chemical crosslinked substrate-Si-O crosslinking is bound to substrate of one or more of SiO2, Al2O3, Fe2O3, TiO2, MgO, CaO, K2O and / or Na2O.

According to the present invention, there is thus obtained a new and improved superhydrophobic and highly oleophilic porous calcined inorganic granulated absorbent consisting of a substrate of calcined granulate, the main constituent is diatomaceous earth, also called diatoms, and further containing preferably, but not limited to, about 1/3 clay and containing preferably, but not limited to, around 1/10 ash.

According to the present invention, there is thus obtained a new and improved superhydrophobic and highly oleophilic porous calcined inorganic granulated absorbent where permanent chemically crosslinked superhydrophobic strong oleophilic coatings forms a maximum of 0.05 micron thick coating by crosslinking to a siloxane, preferably but not limited to, a polysiloxane.

According to the present invention there is thus provided a process for preparing a new and improved superhydrophobic and highly oleophilic porous calcined inorganic granulated absorbent wherein 1-10% siloxane, or preferably 3-5%, is dissolved in an nonpolar dearomatized volatile hydrocarbon solvent, preferably isoalcanic, and preferably with hydrocarbon chain lengths between C10 and C18, in which substrate is placed and wetted completely, whereafter solvent is evaporated at a temperature above solvent evaporation temperature, typically between 170 and 220 degrees Celsius, after which the dry substrate with the bonded siloxane is heated to between 170 and 700 degrees Celsius for 15 minutes to 45 minutes, preferably the temperature is 350-400 degrees Celsius for 20-30 minutes, whereby permanent crosslinking will take place between the metal oxides of the substrate and siloxane to form a permanent chemical bond and one with a coating thickness in the area about 0.03 - 0.05 microns across the substrate surface.

According to the present invention there is thus provided a process for preparing a new and improved superhydrophobic and highly oleophilic porous calcined inorganic granulated absorbent where evaporated solvent is cooled to liquid form and reused for repeated mixing and dissolution of a siloxane for new coating of untreated substrate according to the invention.

According to the present invention there is thus provided a method of using a new and improved superhydrophobic and highly oleophilic porous calcined inorganic granulated absorbent where the superhydrophobic oleophilic product is placed in a filter housing or in a filter cartridge or in an open filter bed through which a surfactant liquid , preferably an alcohol being processed, after which the product is flushed with clean water, the product now having a modified hydrophilic surface through which oil-contaminated process water is sprayed and whereby the product, despite spotting, receives its original affinity for oil and by oil absorption displaces water in pore volume in favour of oil so that all available pore volume is used for oil absorption.

According to the present invention there is thus provided a method of regenerating a new and improved superhydrophobic and highly oleophilic porous calcined inorganic granulated absorbent where the product is washed in a solvent of dearomatized volatile hydrocarbon which is preferably isoalcanic solvent with hydrocarbon chain length in the range of C10- C18, after which solvent is displaced with saline water in which solvent is not dissolved and in which product is washed so that saline water also displaces solvent in the pore volume of the product, after which it is possible to process oil contaminated water again through the product medium.

According to the present invention, there is thus provided a use of a product and method for a new and improved superhydrophobic and highly oleophilic porous calcined inorganic granulated absorbent where the product is placed and used as a media filter or in an open filter bed or in a filter housing or in a filter cartridge.

According to the present invention, there is thus provided a use of the product and method for a new and improved superhydrophobic and highly oleophilic porous calcined inorganic granulated absorbent where the product is used for cleaning oil contamination from a process water flow.

According to the present invention, there is thus obtained a use of the product and method for a new and improved superhydrophobic and strongly oleophilic porous calcined inorganic granulated absorbent where the product is used for absorption of oil spill.

The invention is characterized in that the product is applied to a permanent chemical crosslinked superhydrophobic oleophilic surface coating by the formation of substrate-Si-O bonds where the average tube diameter reduction due to surface coating is not reduced more than 0.1 micron in which the permanent chemical crosslinked substrate Si crosslinking is bound to substrate of one or more of SiO2, Al2O3, Fe2O3, TiO 2, MgO, CaO, K2O and/or Na2O.

Further, the invention is characterized in that the substrate consists of calcined granules, the main constituent being diatomaceous earth, also called diatoms, and more preferably about 1/3 clay, and preferably about 1/10 ash.

Further, the invention is characterized in that the permanent chemically crosslinked superhydrophobic strong oleophilic coating in average creates a maximum of 0.05 micron thick coating by crosslinking to a siloxane, preferably a polysiloxane.

Further, the invention is characterized in that 1-10% siloxane, or preferably 3-5%, is dissolved in an nonpolar de-aromatized volatile hydrocarbon solvent, preferably isoalcanic, and preferably with hydrocarbon chain lengths between C10 and C18, in which substrate is placed and wetted completely, after which the solvent is evaporated, the temperature is evaporated above the solvent evaporation temperature, typically between 170 and 220 degrees Celsius, after which the dry substrate with the bonded siloxane is heated to between 170 and 700 degrees Celsius for 15 minutes to 45 minutes, preferably the temperature is 350-400 degrees Celsius for 30 minutes, whereby permanent crosslinking will take place between the metal oxides of the substrate and siloxane to form a permanent chemical bond and one with a coating thickness in the range of about 0.05 microns across the substrate surface.

Further, the invention is characterized by cooling the evaporated solvent into liquid state and reuse for repeated mixing and dissolution of a siloxane for the new coating of untreated substrate according to the invention.

Further, the invention is characterized in that the superhydrophobic oleophilic product is placed in a filter bed or filter housing or in a filter cartridge through which a surfactant liquid, preferably an alcohol is being processed, after which the product is flushed with clean water, the product now having a modified hydrophilic surface through which oil contaminated process water is sprayed and whereby the product, despite wetting, receives its original affinity for oil and upon absorption displace water in pore volume in favour of oil so that all available pore volume is used for oil absorption.

Further, the invention is characterized in that the product when the oil is measured is washed in a solvent of dearomatized volatile hydrocarbon which is preferably isoalcanic solvent with hydrocarbon chain length in the range of C10 -C18, whereupon solvent is displaced with saline water in which solvent is not dissolved and in which product is washed such that saline water is also displaces solvent in the pore volume of the product, after which it is possible to process oil contaminated water again through the product medium.

Further, the invention is characterized by use for the absorption of oil spills.

### Advantages of the present invention

The present product has the advantage that it can selectively absorb oil throughout the entire pore volume if oil is present in or on the water.

Furthermore, it is an advantage of the present invention that the original tubular absorbent structure of the product is not sealed by the applied hydrophobic and olefin component according to the method as application only reduces the available absorption capacity approx. 10% due to the coating thickness of only 0.05 micron. Commonly known coating technology typically creates coating thickness of 0.5 to 2 microns and will seal the thin-walled tubes of the absorbent, in which 90% of the tubes have a diameter of less than 1 micron, and absorption will then be prevented. According to experiments, the product absorbs, without hydrophobic oleophilic coating and no water, 105% oil relative to its bulk volume, and correspondingly 95% oil absorption relative to its bulk volume after application of a hydrophobic oleophilic coating.

It is also advantageous for the present product that the hydrophobic and oleophilic coatings are permanently chemically bonded, so that mechanical wear or chemical influence of process water does not affect the life of the coating.

It is also an advantage of the present product that the product which becomes superhydrophobic and strongly oleophilic retains its strong affinity for oil even after it is wetted with a surfactant such as an alcoholic, so that it recovers its hydrophilic character when it is in contact with water. The retained affinity for oil means that by filtering oil in water, the oil is absorbed as efficiently as before surfactants were applied and the present water is completely displaced from the wetted pores by oil. According to filtration tests, a product without hydrophobic and oleophilic coating absorbed only 43% of its bulk volume before saturation and break-through of oil. Product according to the invention wetted with surfactant absorbed 94% under identical conditions.

It is also an advantage of the present invention that the product can absorb with full hydraulic capacity in a wetted state, by means of a surface active substance which is primed on before first use. This allows hydraulic capacity to be maintained as for a hydrophilic medium filter. Water flow in superhydrophobic medium filters is associated with high resistance and would not work. In addition, in a filter housing or in an open filter bed, the medium would float on the surface and could not be used, but in a primed state with surfactant, the water-washed product will act as a normal sand filter where the particles are stable in the bottom of the filter.

It is a further advantage of the present invention that the solvent does not dissolve the hydrophobic oleophilic coating so that a solvent can be used to regenerate the filter mass by dissolving the oil from the pores. By using a water-soluble solvent, saline water will bypass solvent and oil and there is only a thin film of solvent left on the pore walls. This represents only about 10% further reduction in absorption capacity in repeated use, and the regenerated product will still have an absorption capacity that far exceeds other comparable absorption media such as clay, activated charcoal and walnut shell. These can absorb 30-50% of their bulk volume new and far less if they try to regenerate. With reference to the described experiments, the product according to the invention, takes up 94% oil related to bulk volume new and 85% after regeneration as illustrated in the following described tests.

It is also an advantage of the present invention that when applying the product as an absorbent for oil spills, only oil is absorbed.

It is also a surprising advantage of the present product that no oil leak occurs even from the oil-absorbed medium.

It is also an advantage of the present product that it will immediately absorb large amounts of oil with high hydraulic load. Known granulated absorbents or granulated sorbents release oil through filtration already at 1000mg / l of oil in water.

Production of product for tests;
50 liters of polysiloxane were dissolved in a vessel of 950 liters of aliphatic de-aromatized hydrocarbon solvent with hydrocarbon chains C11-c15. Then 1m3 of calcined molars of grain size 0.5-0.8 mm were added to the vessel. The mixture was left for 15 minutes to ensure complete liquid intrusion into Moler granules. Then, excess fluid was drained off. Then, solvent was evaporated at 200 degrees Celsius, cooled and recycled for reuse. The dry mass was then exposed to 400 degrees Celsius temperature for 25 minutes. The final product was then cooled.

### Test 1

Final product was tested as follows;
immersed in water for 3 months- result: still 100% hydrophobic
floating on water for 3 months- result: not a single grain sunk
Granulate immersed in pure hydrochloric acid - result: hydrophobic coating unaffected
Granulate exposed to open fire for 5 minutes - result: no change in hydrophobia

### Test 2

Four identical glasses with fine netting bottoms were filled with 1 liter of product to 10 cm filter depth.
Glass A: Untreated hydrophobic product
Glass B: Treated hydrophobic and oilophilic product
Glass C: Treated hydrophobic and oilophilic product, primed with isopropanol and flushed with water
Glass D: As glass C but previously saturated with oil, cleaned with solvent and flushed with saline water.

Production of stock solution of synthetic produced water with oil emulsion.
1 m3 synthetic, 60 degrees Celsius produced water was made with salinity of 12 %, in which in addition to NaCl2, 4000 ppm NaSO4 and 2000 ppm CaCl2, 500 ppm NaCO3- and 1000 ppm BaCl2 and 10 ppm MgCl2, were added. 4000 ppm of crude oil was sheared into a microemulsion by a high-speed multistage centrifugal pump.

Identical produced water was supplied, and the water was gravimetrically filtrated through the product and collected in the 4 transparent measuring beacons under each of the 4 glasses A-D.

The following was observed and measured:
Glass B: No waterflow at all. The superhydrophobic surface prevented hydraulic flow through the medium.
Glass A: Smooth waterflow and oil break through at 44% saturation relative to volume of oil/filter medium.
Glass C: Smooth water flow identical to glass A, but oil break through occurred at 94% saturation relative to volume oil/filter medium
Glass D: Slightly less flow, and oil break-through occurred at 85 % saturation relative to oil/filter medium.

This shows that the product works as described and that the present invention describes a filter medium that absorbs more than twice as much oil from water according to the invention, processed form of the product, even after regeneration according to the invention. It is also shown that the product, according to the invention, absorbs 85-95% of its bulk volume as a water filter, while other known filter medium absorbents absorb 40-50 % of their bulk volumes.

### Test 3

1 liter of oil spill in a vessel of 10 liters of water was sprinkled with 1.1 liters of product according to the invention. All oil was absorbed. Oil / absorbent sank to the bottom, and an indication that all oil was absorbed was when absorbent grain began to float on the surface. When 8-10 grains floated without sinking, it showed that there is no oil film on the surface that would result in saturation of the grains with subsequent sinking.

A fast stirrer was used in the vessel that whipped up the used absorbent mass, for each day for 2 weeks. No oil floated to the surface of the water, and it could be observed that a small amount of grain absorbent flowed without sinking. No absorbent leakage was observed during the 2 weeks.

The invention may be also described by the following clauses :

### CLAUSES

Clause 1. An oil absorbing product, consisting of a substrate in the form of calcined granulate whose main constituent is diatomaceous earth having thin walled tubes where typically 90% of the tubes have a diameter of less than 1 micron, **characterized in that** the product has a superhydrophobic oleophilic surface coating of polysiloxane permanently chemically crosslinked to the substrate by substrate - Si -O bonds where the average tube diameter reduction due to surface coating is not more than 0.1 micron and in which the permanent chemical crosslinked substrate Si-O crosslinks are bound to the substrate by one or more of SiO2, Al2O3, Fe2O3 , TiO2, MgO, CaO, K2O and / or Na2O.
Clause 2. The oil absorbing product according to clause 1, wherein the coating is a coating with an average maximum thickness of 0.05 µm.
Clause 3. An oil absorbing filter comprising a filter bed, a filter housing or a filter cartridge in which is arranged an oil absorbing product according to any one of clauses 1 or 2.
Clause 4. Superhydrophobic and strongly oleophilic porous calcined inorganic granulated absorbent product for oil absorption wherein the absorbing element in the substrate is in the state of thin walled tubes where typically 90% of the tubes have a diameter of less than 1 micron, characterized in that the product is added a permanent chemical crosslinked superhydrophobic oleophilic surface coating upon formation of substrate - Si -O bonds where the average tube diameter reduction due to surface coating is not more than 0.1 micron in which the permanent chemical crosslinked substrate Si-O crosslinks are bound to the substrate by one or more of SiO2, Al2O3, Fe2O3 , TiO2, MgO, CaO, K2O and / or Na2O.
Clause 5. Product as claimed in clause 4, characterized in that the substrate consists of calcined granulate whose main constituent is diatomaceous earth, also called diatoms, and preferably about 1/3 clay and preferably about 1/10 ash.
Clause 6. Product as described in clauses 4-5, characterized in that the permanently chemically crosslinked superhydrophobic strong oleophilic coating creates a coating with average maximum thickness of 0.05 micron by crosslinking with a siloxane, preferably a polysiloxane.
Clause 7. Method for preparing a product as claimed in clauses 4-6, wherein 1-10% of siloxane, or preferably 3-5%, is dissolved in an nonpolar de-aromatized volatile hydrocarbon solvent, preferably isoalkanic, and preferably with hydrocarbon chain lengths between C10 and C18 in which substrate is placed and wetted completely, where after solvent is evaporated off temperature above evaporation temperature of solvent, typically between 170 and 220 degrees Celsius, after which the dry substrate with the coated siloxane is heated to between 170 and 700 degrees Celsius from 15 minutes to 45 minutes, preferably 350-400 degrees Celsius for 30 minutes, whereby permanent crosslinking will take place between the metal oxide of the substrate and siloxane to form a permanent chemical bond and one with a coating thickness in the range of about 0.05 microns across the substrate surface.
Clause 8. A method for preparing a product as claimed in clauses 4-7, characterized in that the evaporated solvent is cooled to liquid state and reused for repeated mixing and dissolution of a siloxane for the new coating of untreated substrate according to the invention.
Clause 9. A method of using the product as described in clauses 4-8, characterized in that the superhydrophobic oleophilic product is arranged in a filter bed, or in a filter housing, or in a filter cartridge, through which a surface active liquid, preferably an alcohol is being processed, after which the product is flushed clean with pure water whereby the product now has a modified hydrophilic surface through which oil contaminated process water is processed and whereby the product, despite spotting, maintain its original affinity for oil and by means of absorption displaces water in the pore volume in favour of oil so that all available pore volume is used for oil absorption.
Clause 10. A process for regenerating the product as described in clauses 4-9, characterized in that the product when oil saturated cleaned with a solvent of dearomatized volatile hydrocarbon which is preferably isoalkanic solvent with hydrocarbon chain length in the range of C10 -C18, after which solvent is displaced with saline water in which solvent is not solved and in which product is washed so that saline water also displaces solvent in the pore volume of the product, after which it is possible to process oil contaminated water again through the product medium.
Clause 11. Use of the product according to clause 4-10, characterized in that the product is placed as a media filter in an open filter bed or in a filter housing or in a filter cartridge.
Clause 12. Use of the product and method according to clause 4-11, characterized by use for the cleaning of oil contamination from a process water flow.
Clause 13. Use of product according to clause 4-12, characterized by use for oil spill absorption.

## Claims

1. A process for preparing a new and improved superhydrophobic and highly oleophilic porous calcined inorganic granulated absorbent wherein 1-10% siloxane, or preferably 3-5%, is dissolved in an nonpolar dearomatized volatile hydrocarbon solvent, preferably isoalcanic, and preferably with hydrocarbon chain lengths between C10 and C18, in which substrate is placed and wetted completely, whereafter solvent is evaporated at a temperature above solvent evaporation temperature, typically between 170 and 220 degrees Celsius, after which the dry substrate with the bonded siloxane is heated to between 170 and 700 degrees Celsius for 15 minutes to 45 minutes, preferably the temperature is 350-400 degrees Celsius for 20-30 minutes, whereby permanent crosslinking will take place between the metal oxides of the substrate and siloxane to form a permanent chemical bond and one with a coating thickness in the area about 0.03 - 0.05 microns across the substrate surface.

2. The process according to claim 1, wherein the substrate is diatomaceous earth.

3. Use of a product made by the process of claims 1 or 2 for cleaning oil contamination from a process water flow.

4. Use of a product made by the process of claims 1 or 2 for oil spill absorption.
